# FASCICULE DE BREVET EUROPEEN

(11) **EP 3 990 752 B1**
(45) Date de publication et mention de la délivrance du brevet: **02.10.2024**
(21) Numéro de dépôt: 20785789.7
(22) Date de dépôt: 22.06.2020
(51) Int. Cl.: F01D 11/00

(54) **PLATEFORME INTER-AUBE AVEC CAISSON SACRIFICIEL**
ZWISCHENSCHAUFELPLATTFORM MIT EINEM OPFER-KASTENABSCHNITT
INTER-BLADE PLATFORM WITH A SACRIFICIAL BOX SECTION

(30) Priorité: 26.06.2019 FR 1906971
(43) Date de publication de la demande: 04.05.2022
(73) Titulaire: SAFRAN AIRCRAFT ENGINES, 75015 Paris (FR)
(72) Inventeur: FIXY, Teddy, 77550 Moissy-Cramayel (FR); GUIVARC'H, Jérémy, 77550 Moissy-Cramayel (FR); NOTARIANNI, Gilles, Pierre-Marie, 77550 Moissy-Cramayel (FR); DE GAILLARD, Thomas, Alain, 77550 Moissy-Cramayel (FR)
(74) Mandataire: Regimbeau
(86) Numéro de dépôt international: PCT/FR2020/051077
(87) Numéro de publication internationale: WO 2020/260810

(56) Documents cités:
- EP-A1- 1 503 044
- FR-A1- 3 018 473
- FR-A1- 3 029 563
- FR-A1- 3 033 180

## Description

### DOMAINE DE L'INVENTION

L'invention concerne le domaine général des plateformes inter-aubes dans les soufflantes des turbomachines aéronautiques, notamment lorsque ces plateformes sont réalisées dans un matériau composite comprenant un renfort fibreux densifié par une matrice.

### ARRIERE-PLAN TECHNOLOGIQUE

Les plateformes inter-aube de soufflante de turbomachine, notamment de turboréacteur, sont disposées entre les aubes de la soufflante dans le prolongement du cône d'entrée de celle-ci. Elles permettent notamment de délimiter, du côté intérieur, la veine annulaire d'entrée d'air dans la soufflante, cette veine étant délimitée du côté extérieur par un carter. Ces plateformes comprennent généralement une base, configurée pour délimiter la veine, et un caisson, s'étendant radialement vers l'intérieur depuis la base afin de permettre un appui de la plateforme sur le disque de soufflante. Le caisson est en outre configuré pour rigidifier la plateforme afin d'assurer la continuité du flux aérodynamique dans la soufflante.

Il est connu de réaliser les plateformes inter-aubes des soufflantes en matériau composite. Le matériau composite comprend généralement un renfort fibreux densifié par une matrice. Selon l'application envisagée, la préforme peut être en fibres de verre, carbone ou céramique et la matrice peut être en un matériau organique (polymère), en carbone ou en céramique. Pour des pièces de forme géométrique relativement complexe, il est également connu de réaliser une structure ou ébauche fibreuse en une seule pièce par tissage 3D ou multicouches et de mettre en forme la structure fibreuse pour obtenir une préforme fibreuse ayant une forme voisine de celle de la pièce à fabriquer. La réalisation par tissage 3D d'une préforme fibreuse à section en forme de π (Pi) pour plateforme a ainsi déjà été proposée dans le document WO 2013/088040. Ces plateformes présentent une section en forme de π avec une base et deux flancs formant raidisseurs qui s'étendent à partir d'une face de la base et servant à rigidifier la plateforme de sorte à éviter tout déplacement de celle-ci sous l'effort centrifuge dû à la vitesse de rotation de la soufflante.

Afin de renforcer la résistance de la plateforme aux efforts centrifuges, il a été proposé d'ajouter une paroi entre les extrémités libres des flancs pour former un caisson fermé sous la base de la plate-forme. On pourra notamment se référer au document n°FR 2 989 977 au nom de la Demanderesse, qui décrit un exemple d'ébauche fibreuse tissée en une seule pièce par tissage tridimensionnel pour la réalisation d'une plateforme à caisson fermé. Une telle ébauche permet effectivement d'obtenir une plateforme en matériau composite et à caisson fermé limitant les risques de rebut. Le caisson permet ainsi d'assurer une rigidité de la plateforme face aux diverses sollicitations mécaniques rencontrées (notamment la force centrifuge et les ingestions diverses) et le maintien en position de la plateforme à l'arrêt de la turbomachine.

Toutefois, les nombreuses opérations nécessaires à la fabrication d'une telle plateforme (en particulier la fabrication de la préforme, les déliaisons, l'injection et le pochage) restent importantes et complexes et ne sont pas nécessairement justifiés pour tous les types de moteurs, notamment lorsque la soufflante ne subit pas une force centrifuge trop importante en fonctionnement. En outre, en cas d'impact avec un objet, le caisson de telles plateformes a tendance à permettre une propagation du choc aux aubes adjacentes, ce qui risque de pénaliser fortement la soufflante.

Le document FR 3 029 563 décrit une plateforme inter-aubes comprenant une base, deux flancs s'étendant radialement depuis la base et une structure en U formant un caisson qui s'étend sur une portion de longueur de la base. La partie de la plateforme qui est dépourvue de caisson ne vient pas en contact avec le disque.

Les documents FR 3 018 473 et EP 1 503 044 décrivent une plateforme inter-aubes comprenant une base et deux flancs.

Le document FR 3 033 180 décrit une plateforme inter-aubes comprenant un caisson fermé.

### RESUME DE L'INVENTION

Un objectif de l'invention est donc d'optimiser les coûts liés à la fabrication des plateformes inter-aubes de soufflante pour turbomachine, notamment lorsque celles-ci sont réalisées dans un matériau composite tel qu'un renfort fibreux densifié par une matrice polymère, ainsi que leur masse.

Pour cela, l'invention propose une soufflante conforme à la revendication 1. Des modes de réalisation de la soufflante sont définies dans les revendications dépendantes.

La soufflante comprend en particulier une plateforme inter-aubes inter-aubes d'une soufflante de turbomachine comprenant :
- une base comprenant une première surface configurée pour délimiter une veine d'écoulement dans la soufflante et une deuxième surface opposée à la première surface et
- deux flancs, s'étendant radialement du côté de la deuxième surface, chacun des flancs présentant une extrémité libre sacrificielle configurée pour venir en appui contre un disque de soufflante.

Par sacrificielle, on comprendra ici que l'extrémité libre des flancs s'use avant le reste des flancs et avant d'endommager la face radiale (ou le cas échéant une tôle de protection rapportée sur le disque de soufflante), de sorte à limiter la propagation de chocs vers les aubes.

Certaines caractéristiques préférées mais non limitatives de la plateforme décrite ci-dessus sont les suivantes, prises individuellement ou en combinaison :
- l'extrémité libre des flancs présente une épaisseur plus faible qu'une épaisseur moyenne du reste des flancs ;
- la base et les deux flancs sont réalisés dans un matériau composite comprenant un renfort fibreux densifié par une matrice polymère ;
- une épaisseur du renfort fibreux au niveau de l'extrémité libre des flancs est plus faible qu'une épaisseur moyenne du renfort fibreux dans le reste des flancs ;
- l'épaisseur de l'extrémité libre sacrificielle des flancs est au plus égale à 75% de l'épaisseur moyenne du reste des flancs, de préférence au plus égale à 50% de l'épaisseur moyenne du reste des flancs ;
- l'extrémité libre des flancs est usinée ;
- la base et les flancs sont formés intégralement et en une seule pièce ;
- chaque flanc comprend une paroi formée intégralement et en une seule pièce avec la base et une plaque, rapportée et fixée sur la paroi, et dans laquelle soit la plaque s'étend depuis la base sans recouvrir l'extrémité libre sacrificielle, soit la plaque s'étendant depuis la base et au-delà de l'extrémité libre de la paroi ; et/ou
- la base comprend un premier bord et un deuxième bord, lesdits bords s'étendant de part et d'autre des flancs, le premier bord et le deuxième bord étant sacrificiels.

Selon un deuxième aspect, l'invention propose également une soufflante comprenant un disque de soufflante, au moins une aube et au moins une plateforme inter-aubes comme décrite ci-dessus. Une soufflante à pluralité d'aubes sera décrite en exemple de réalisation.

### BREVE DESCRIPTION DES DESSINS

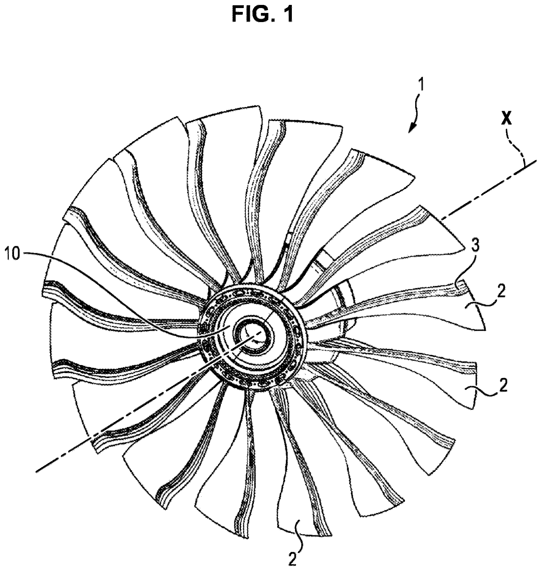

D'autres caractéristiques, buts et avantages de la présente invention apparaîtront mieux à la lecture de la description détaillée qui va suivre, et au regard des dessins annexés donnés à titre d'exemples non limitatifs et sur lesquels : La figure 1 illustre un exemple de réalisation d'une soufflante conforme à un mode de réalisation de l'invention.
La figure 2a est une vue en coupe transversale d'un exemple de réalisation d'une plateforme inter-aubes conforme à un premier mode de réalisation de l'invention.
La figure 2b est une vue en coupe transversale d'un exemple de réalisation d'une plateforme inter-aubes conforme à un deuxième mode de réalisation de l'invention.
La figure 3 est une vue en perspective partielle d'une section d'une soufflante, vue depuis une face amont de ladite soufflante.
La figure 4 est une vue schématique d'un exemple d'ébauche fibreuse tissée tridimensionnelle selon un mode de réalisation de l'invention.

### DESCRIPTION DETAILLEE D'UN MODE DE REALISATION

Dans la présente demande, l'amont et l'aval sont définis par rapport au sens d'écoulement normal du gaz dans la soufflante 1 à travers la turbomachine. Par ailleurs, on appelle axe de révolution de la soufflante 1 turbomachine, l'axe X de symétrie radiale de la soufflante 1. La direction axiale correspond à la direction de l'axe X de la soufflante 1, et une direction radiale est une direction perpendiculaire à cet axe et passant par lui. Sauf précision contraire, on utilisera interne et externe, respectivement, sont utilisés en référence à une direction radiale de sorte que la partie ou la face interne (i.e. radialement interne) d'un élément est plus proche de l'axe X que la partie ou la face externe (i.e. radialement externe) du même élément.

Une soufflante 1 de turbomachine comprend un disque 10 de soufflante 1 portant une pluralité d'aubes 2 de soufflantes, associées à des plateformes 20 inter-aubes.

Les aubes 2 sont engagées dans des rainures axiales 12 formées dans une face radiale 14 du disque 10 de soufflante 1. Optionnellement, le disque de soufflante 10 peut comprendre une tôle de protection sacrificielle 16, ou clinquant. De manière connue en soi, la tôle de protection 16 a pour fonction, en utilisation, de protéger la face radiale 14 du disque 10 en se détériorant avant le disque 10.

Chaque aube 2 présente un pied, engagé dans l'une des rainures, une tête (ou sommet), un bord d'attaque 3 et un bord de fuite. Le bord d'attaque 3 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados.

Les aubes 2 sont associées à leur extrémité radialement interne à des plateformes 20 inter-aubes, qui sont disposées dans le prolongement d'un cône d'entrée.

Chaque plateforme 20 comprend :
- une base 21 comprenant une première surface 22 configurée pour délimiter une veine d'écoulement dans la soufflante 1 et une deuxième surface 23 opposée à la première surface 22,
- deux flancs 25, s'étendant radialement du côté de la deuxième surface 23, chacun des flancs 25 présentant une extrémité libre 26 configurée pour venir en appui contre un disque 10 de soufflante 1. L'extrémité libre 26 des flancs 25 s'étend radialement à l'intérieur par rapport à la base 21 et est configurée pour venir en appui contre la face radiale 14 du disque 10, ou le cas échéant contre la face externe de la tôle de protection 16.

L'extrémité libre 26 de chaque flanc 25 est sacrificielle. Par sacrificielle, on comprendra ici que l'extrémité libre 26 des flancs 25 s'use avant le reste des flancs et avant d'endommager la face radiale 14 ou le cas échéant la tôle de protection 16, de sorte à limiter la propagation de chocs vers les aubes 2.

La plateforme 20 inter-aube est donc plus simple à réaliser, mais également plus légère étant dépourvue de paroi liant l'extrémité radiale interne des flancs 25, tout en limitant les risques de propagations des chocs aux aubes 2 adjacentes à la plateforme 20 en cas d'impact. En effet, en cas d'impact, la partie sacrificielle des flancs 25 a tendance à s'endommager, réduisant ainsi la rigidité de la plateforme 20 et évitant par conséquent l'endommagement des aubes 2 adjacentes, en particulier de leur pied.

Dans une forme de réalisation, une épaisseur e₁ de chaque extrémité libre 26 sacrificielle est inférieure à une épaisseur moyenne e₂ du reste des flancs 25. Par épaisseur e₁, e₂, on comprendra ici la dimension suivant un axe normal aux flancs 25.

Par exemple, l'épaisseur e₁ de l'extrémité libre 26 sacrificielle des flancs 25 est au plus égale à 75% de l'épaisseur moyenne e₂ du reste des flancs 25, de préférence au plus égale à 50% de l'épaisseur e₂ du reste des flancs 25.

Pour chaque extrémité libre 26 sacrificielle, une hauteur h de l'extrémité libre 26 sacrificielle peut être comprise entre trois fois et six fois une épaisseur moyenne e₂ du reste des flancs 25. Par hauteur h, on comprendra ici une dimension suivant un axe sensiblement normal à la deuxième surface 23 de la base 21.

Ainsi, dans un exemple de réalisation, chaque plateforme 20 présente des flancs 25 dont l'épaisseur moyenne e₂ (hors extrémité libre 26) est égale à 4 mm. L'épaisseur e₁ de l'extrémité libre 26 peut alors être comprise entre 2 mm et 3 mm tandis que sa hauteur h peut être comprise entre 12 mm et 24 mm.

La base 21 et les flancs 25 de chaque plateforme 20 20 sont formées intégralement et en une seule pièce.

Dans une forme de réalisation, la base 21 et les flancs 25 peuvent être réalisés dans un matériau composite comprenant une renfort fibreux densifié par une matrice polymère.

Le renfort fibreux peut être formé à partir d'une préforme fibreuse obtenue par tissage tridimensionnel avec épaisseur évolutive. Il peut notamment comprendre des fibres en carbone, en verre, aramide et/ou céramique. La matrice quant à elle est typiquement une matrice polymère, par exemple époxyde, bismaléimide ou polyimide. L'aube 1 est alors formée par moulage au moyen d'un procédé d'injection sous vide de résine du type RTM (pour « Resin Transfer Moulding), ou encore VARRTM (pour Vacuum Resin Transfer Molding).

En variante, la base 21 et les flancs 25 peuvent être réalisés en métal.

Dans un premier mode de réalisation, chaque extrémité libre 26 sacrificielle est obtenue par amincissement local des flancs 25. Pour chaque flanc 25, l'amincissement peut être réalisé sur chaque face 27, 28 du flanc 25. En variante, l'amincissement peut être réalisé sur les faces 27 en regard des flancs 25. Selon une autre variante encore, l'amincissement peut être réalisé sur les faces opposées 28 des flancs 25.

Par exemple, lorsque la plateforme 20 est réalisée en métal ou en matériau composite, notamment comportant un renfort fibreux densifié par une matrice polymère, l'extrémité libre 26 sacrificielle peut être usinée. Par exemple, les flancs 25 de la plateforme 20 peuvent être usinés après leur moulage.

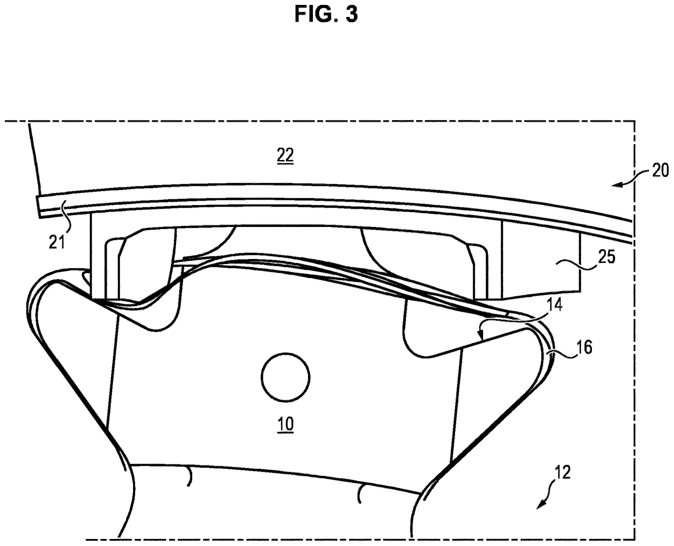

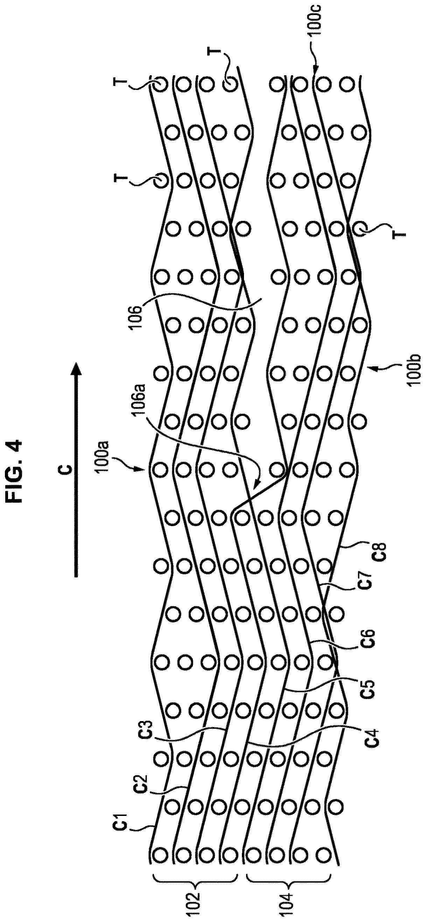

En variante, lorsque la plateforme 20 est réalisée dans un matériau composite, l'extrémité libre 26 sacrificielle peut être obtenue en réalisant une déliaison ouverte dans le renfort fibreux. On pourra notamment se référer à la Figure 4, qui représente schématiquement un plan de chaîne d'une ébauche fibreuse 100 tissée tridimensionnelle à partir de laquelle une préforme fibreuse de plateforme 20 peut être mise en forme, avant injection de résine ou densification par une matrice et usinage éventuel, afin d'obtenir une plateforme 20 de soufflante 1 en matériau composite telle que celle illustrée sur les figures 1 à 4. Par tissage tridimensionnel, on comprendra que les fils de chaîne C₁-C₈ suivent des trajets sinueux afin de lier entre eux des fils de trame T appartenant à des couches de fils de trame différentes exception faite de déliaisons 106, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755. Sur la figure 4, l'ébauche fibreuse 100 présente deux surfaces opposées 100a, 100b et comprend une première partie 102 et une deuxième partie 104. Ces deux parties 102, 104 forment respectivement une première et une deuxième partie de l'épaisseur e de l'ébauche fibreuse 100 entre ses surfaces opposées 100a, 100b.

Chaque partie 102, 104 de l'ébauche fibreuse comprend une pluralité de couches superposées de fils de trame T, quatre dans l'exemple illustré, le nombre de fils de trame T pouvant être tout nombre souhaité au moins égal à deux en fonction de l'épaisseur e désirée. En outre, les nombres de couches de fils de trame dans les parties 102 et 104 pourront être différents les uns des autres. Les fils de trame T sont disposés en colonnes comprenant chacune des fils de trame T de la première et de la deuxième partie 102, 104 de l'ébauche fibreuse. Sur une portion de la dimension de l'ébauche fibreuse 100 en direction chaîne C, la première partie 102 et la deuxième partie 104 de l'ébauche fibreuse 100 sont séparées totalement l'une de l'autre par une déliaison ouverte 106 qui s'étend à partir d'une limite amont 106a jusqu'à un bord aval 100c de l'ébauche fibreuse 100. Par déliaison ouverte 106, on entend ici une zone fermée à une extrémité et ouverte à une extrémité opposée qui n'est pas traversée par des fils de chaîne C₁-C₈ liant entre eux des fils de trame T de couches appartenant respectivement à deux des couches, dans l'exemple ici la deuxième partie 104 et la deuxième partie 104 de l'ébauche fibreuse 100.

Hormis au niveau de la déliaison ouverte 108, les couches de fils de trame T sont liées entre elles par des fils de chaîne d'une pluralité de couches de fils de chaîne C₁ à C₈. Dans l'exemple plus précisément illustré sur la figure 5, un même premier fil de chaîne C₄ lie entre elles des couches de fils de trame T de la première partie 102 de l'ébauche fibreuse adjacentes à la déliaison 106 et des couches de fils de trame T de la deuxième partie 102 de l'ébauche fibreuse au-delà de la déliaison 106, c'est-à-dire devant la limite amont 106a. Bien entendu, cette liaison pourrait être réalisée par plusieurs premiers fils de chaîne.

A l'inverse, un même deuxième fil de chaîne C₅ lie entre elles des couches de fils de trame T de la deuxième partie 104 de l'ébauche fibreuse adjacentes à la déliaison ouverte 106 et des couches de fils de trame T de la première partie 102 de l'ébauche fibreuse au-delà de la déliaison fermée. Bien entendu, cette liaison pourrait être réalisée par plusieurs deuxièmes fils de chaîne. Ainsi, le trajet du fil de chaîne C₅ et celui du fil de chaîne C₆ se croisent au niveau de la limite amont 106a de la déliaison ouverte 106.

La préforme fibreuse 10 comprend donc, dans le sens des fils de chaîne C, une première portion 24 dans laquelle la première partie 102 et la deuxième partie 104 sont fixées solidairement de manière à former, après injection de la matrice, le flanc de la plateforme 20, et une deuxième portion 25 s'étendant entre la limite amont 106a de la déliaison 106 et le bord aval 100c de la préforme, destinée à former l'extrémité libre 26 sacrificielle. Pour cela, il suffit, après tissage, de séparer les deux parties 102 et 104 et de découper l'une d'entre elles, puis de placer la préforme après découpe dans un moule adapté afin d'y injecter la matrice sous vide, conformément aux procédés habituellement utilisés (par exemple par procédé du type RTM ou VARRTM.

Dans ce premier mode de réalisation, la base 21 et les flancs 25 peuvent être formés intégralement et en une seule pièce (monolithiques). Dans le cas où la plateforme 20 inter-aubes est réalisée en matériau composite, les flancs 25 peuvent alors être obtenus en réalisant une déliaison ouverte au niveau de deux bords opposés du renfort fibreux, avant l'injection de la matrice sous vide.

Dans un deuxième mode de réalisation, les flancs 25 peuvent chacun comprendre une paroi 29, formée intégralement et en une seule pièce avec la base 21, et une plaque 30, rapportée et fixée sur la paroi 29.

Dans une première variante de réalisation, la plaque 30 s'étend depuis la base 21 sans recouvrir l'extrémité libre 26 sacrificielle. L'extrémité sacrificielle 26 des flancs 25 est donc formée par la partie non recouverte des parois 29. L'épaisseur de la plaque 30 et de la paroi 29 étant constantes, l'épaisseur du flanc 25 est donc réduite au niveau de son extrémité libre 26.

Dans une deuxième variante de réalisation, la plaque 30 s'étend depuis la base 21 et au-delà de l'extrémité libre 26 de la paroi 29. L'extrémité libre 26 sacrificielle des flancs 25 correspond alors à la partie des plaques 30 qui dépasse des parois 29. L'épaisseur e de la plaque 30 et de la paroi 29 étant constantes, l'épaisseur e du flanc 25 est donc réduite au niveau de son extrémité libre 26.

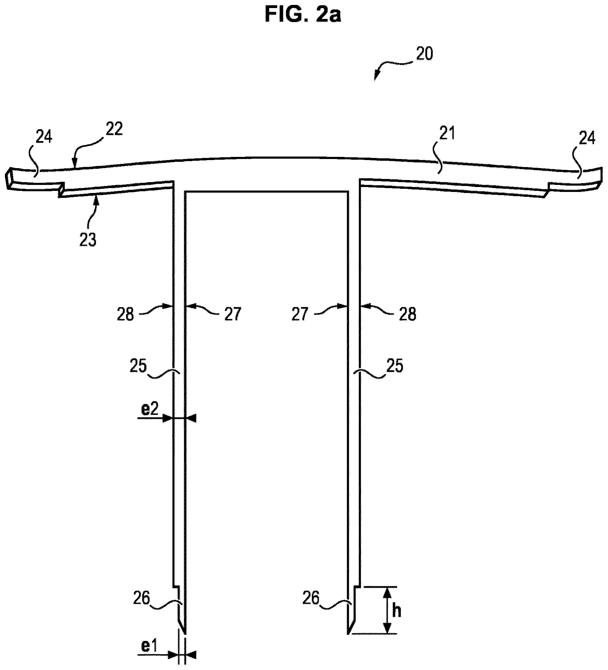

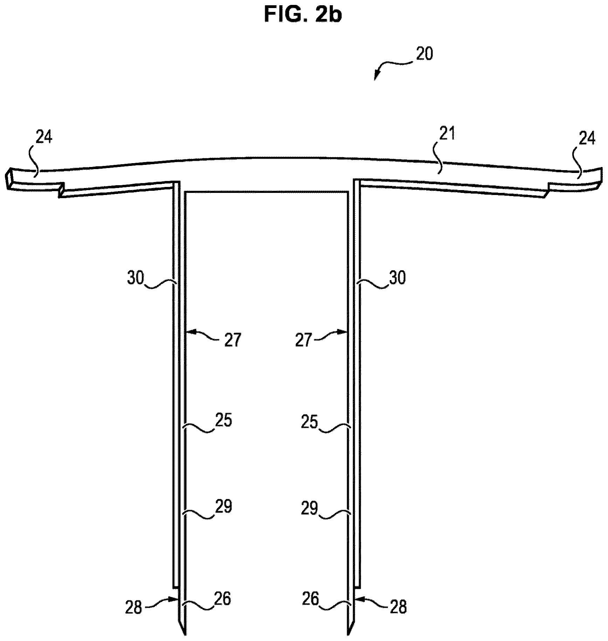

Les plaques 30 peuvent être fixées sur les faces 27 en regard des parois 29 des flancs 25, de sorte à s'étendre l'une en face de l'autre, sous la base 21, ou en variante sur les faces opposées 28 des parois 29 des flancs 25 de sorte à s'étendre de part et d'autre desdites parois 29 (Figure 2b).

La base 21 présente deux bords latéraux 24, s'étendant sensiblement parallèlement aux flancs 25, de part et d'autre desdits flancs 25.

Optionnellement, afin de réduire encore les risques d'endommagement des aubes 2 de soufflante 1 en cas d'impact, les bords latéraux 24 sont sacrificiels. La technologie de réalisation des bords latéraux 24 sacrificiels de la base 21 peut être sensiblement identique à celle des extrémités libres 26 sacrificielles des flancs 25, et comprendre notamment l'usinage, la réalisation d'une déliaison ou la fixation d'une plaque 30 sur la face radiale de la base 21, ladite plaque 30 formant alors la première surface 22 de la base 21.

Par ailleurs, une épaisseur e₁ de chaque bord latéral 24 sacrificiel est inférieure à une épaisseur moyenne du reste de la base 21. Par épaisseur, on comprendra ici la dimension suivant un axe normal à la base.

Par exemple, l'épaisseur des bords latéraux 24 sacrificiels est au plus égale à 75% de l'épaisseur moyenne du reste de la base 21, de préférence au plus égale à 50% de l'épaisseur du reste de la base 21.

Pour chaque bord latéral 24 sacrificiel, une longueur du bord latéral 24 sacrificiel peut être comprise entre trois fois et six fois une épaisseur moyenne du reste de la base 21. Par longueur, on comprendra ici une dimension suivant un axe circonférentiel s'étendant entre les bords latéraux 24 de la base 21, qui est normal aux flancs 25.

Dans ce deuxième mode de réalisation, la base 21 et les parois 29 des flancs 25 peuvent être formés intégralement et en une seule pièce (monolithiques). Dans le cas où la plateforme inter-aubes est réalisée en matériau composite, les parois 29 des flancs 25 peuvent alors être obtenues en réalisant une déliaison ouverte au niveau de deux bords opposés du renfort fibreux, avant l'injection de la matrice sous vide.

## Revendications

1. Soufflante (1) comprenant un disque de soufflante (1), au moins une aube (2) et au moins une plateforme inter-aubes (20) comprenant :
- une base (21) comprenant une première surface (22) configurée pour délimiter une veine d'écoulement dans la soufflante (1) et une deuxième surface (23) opposée à la première surface (22),
- deux flancs (25), s'étendant radialement du côté de la deuxième surface (23), la plateforme étant **caractérisée en ce que** chacun des flancs (25) présente une extrémité libre (26) en appui contre le disque de soufflante (1), l'extrémité libre (26) de chaque flanc (25) étant sacrificielle de sorte que l'extrémité libre (26) des flancs s'use avant le reste des flancs (25) et avant d'endommager la face radiale (14).

2. Soufflante (1) selon la revendication 1, dans laquelle l'extrémité libre (26) des flancs (25) présente une épaisseur (e₁) plus faible qu'une épaisseur moyenne (e₂) du reste des flancs (25).

3. Soufflante (1) selon la revendication 1 ou la revendication 2, dans laquelle la base (21) et les deux flancs (25) sont réalisés dans un matériau composite comprenant un renfort fibreux densifié par une matrice polymère.

4. Soufflante (1) selon la revendication 3, dans laquelle une épaisseur du renfort fibreux au niveau de l'extrémité libre (26) des flancs (25) est plus faible qu'une épaisseur moyenne du renfort fibreux dans le reste des flancs (25).

5. Soufflante (1) selon l'une des revendications 2 à 4, dans laquelle l'épaisseur (e₁) de l'extrémité libre (26) sacrificielle des flancs (25) est au plus égale à 75% de l'épaisseur moyenne (e₂) du reste des flancs (25), de préférence au plus égale à 50% de l'épaisseur moyenne (e2) du reste des flancs (25).

6. Soufflante (1) selon l'une des revendications 1 à 5, dans laquelle l'extrémité libre (26) des flancs (25) est usinée.

7. Soufflante (1) selon l'une des revendications 1 à 6, dans laquelle la base (21) et les flancs (25) sont formés intégralement et en une seule pièce.

8. Soufflante (1) selon l'une des revendications 1 à 6, dans laquelle chaque flanc (25) comprend une paroi (29) formée intégralement et en une seule pièce avec la base (21) et une plaque (30), rapportée et fixée sur la paroi (29), et dans laquelle soit la plaque (30) s'étend depuis la base (21) sans recouvrir l'extrémité libre (26) sacrificielle, soit la plaque (30) s'étendant depuis la base (21) et au-delà de l'extrémité libre (26) de la paroi (29).

9. Soufflante (1) selon l'une des revendications 1 à 8, dans laquelle la base (21) comprend un premier bord (24) et un deuxième bord (24), lesdits bords (24) s'étendant de part et d'autre des flancs (25), le premier bord (24) et le deuxième bord (24) étant sacrificiels.

## Patentansprüche

1. Gebläse (1), umfassend eine Gebläsescheibe (1), mindestens eine Schaufel (2) und mindestens eine Zwischenschaufelplattform (20), umfassend:
- eine Basis (21), die eine erste Oberfläche (22) umfasst, die ausgelegt ist, um einen Strömungskanal in dem Gebläse (1) zu begrenzen, und eine zweite Oberfläche (23) gegenüber der ersten Oberfläche (22),
- zwei Flanken (25), die sich radial auf der Seite der zweiten Oberfläche (23) erstrecken, wobei die Plattform **dadurch gekennzeichnet ist, dass** jede der Flanken (25) ein freies Ende (26) aufweist, das an einer Gebläsescheibe (1) in Anlage kommt, wobei das freie Ende (26) jeder Flanke (25) derart opferfähig ist, dass sich das freie Ende (26) der Flanken vor dem Rest der Flanken (25) und vor Beschädigung der radialen Fläche (14) abnutzt.

2. Gebläse (1) nach Anspruch 1, wobei das freie Ende (26) der Flanken (25) eine Dicke (e₁) aufweist, die geringer ist als eine mittlere Dicke (e₂) des Rests der Flanken (25).

3. Gebläse (1) nach Anspruch 1 oder Anspruch 2, wobei die Basis (21) und die beiden Flanken (25) aus einem Verbundmaterial hergestellt sind, das eine durch eine Polymermatrix verdichtete Faserverstärkung umfasst.

4. Gebläse (1) nach Anspruch 3, wobei eine Dicke der Faserverstärkung im Bereich des freien Endes (26) der Flanken (25) geringer ist als eine mittlere Dicke der Faserverstärkung im Rest der Flanken (25).

5. Gebläse (1) nach einem der Ansprüche 2 bis 4, wobei die Dicke (e₁) des freien Opferendes (26) der Flanken (25) höchstens 75% der mittleren Dicke (e₂) des Rests der Flanken (25), vorzugsweise höchstens 50% der mittleren Dicke (e₂) des Rests der Flanken (25), entspricht.

6. Gebläse (1) nach einem der Ansprüche 1 bis 5, wobei das freie Ende (26) der Flanken (25) bearbeitet ist.

7. Gebläse (1) nach einem der Ansprüche 1 bis 6, wobei die Basis (21) und die Flanken (25) vollständig und in einem Stück geformt sind.

8. Gebläse (1) nach einem der Ansprüche 1 bis 6, wobei jede Flanke (25) eine Wand (29), die vollständig und in einem Stück mit der Basis (21) geformt ist, und eine Platte (30) umfasst, die an der Wand (29) angesetzt und befestigt ist, und wobei sich entweder die Platte (30) von der Basis (21) erstreckt, ohne das freie Opferende (26) zu bedecken, oder sich die Platte (30) von der Basis (21) und über das freie Ende (26) der Wand (29) hinaus erstreckt.

9. Gebläse (1) nach einem der Ansprüche 1 bis 8, wobei die Basis (21) einen ersten Rand (24) und einen zweiten Rand (24) umfasst, wobei sich die Ränder (24) auf beiden Seiten der Flanken (25) erstrecken, wobei der erste Rand (24) und der zweite Rand (24) Opferränder sind.

## Claims

1. Fan (1) comprising a fan disc (1), at least one vane (2) and at least one inter-vane platform (20) comprising:
- a base (21) comprising a first surface (22) configured to delimit a flow path in the fan (1) and a second surface (23) opposite the first surface (22),
- two flanks (25), extending radially on the side of the second surface (23), the platform being **characterised in that** each of the flanks (25) has a free end (26) bearing against the fan disc (1), the free end (26) of each flank (25) being sacrificial so that the free end (26) of the flanks wears before the rest of the flanks (25) and before damaging the radial face (14).

2. Fan (1) according to claim 1, wherein the free end (26) of the side walls (25) has a thickness (e₁) which is smaller than an average thickness (e₂) of the rest of the side walls (25).

3. Fan (1) according to claim 1 or claim 2, wherein the base (21) and the two sides (25) are made of a composite material comprising a fibrous reinforcement densified by a polymer matrix.

4. Fan (1) according to claim 3, wherein a thickness of the fibrous reinforcement at the free end (26) of the flanks (25) is smaller than an average thickness of the fibrous reinforcement in the rest of the flanks (25).

5. Fan (1) according to one of claims 2 to 4, wherein the thickness (e₁) of the sacrificial free end (26) of the flanks (25) is at most 75% of the average thickness (e₂) of the rest of the flanks (25), preferably at most 50% of the average thickness (e2) of the rest of the flanks (25).

6. Fan (1) according to one of claims 1 to 5, wherein the free end (26) of the flanks (25) is machined.

7. Fan (1) according to one of claims 1 to 6, wherein the base (21) and the sides (25) are integrally formed in a single piece.

8. Fan (1) according to any one of claims 1 to 6, wherein each flank (25) comprises a wall (29) formed integrally and in one piece with the base (21) and a plate (30), fitted and secured to the wall (29), and wherein either the plate (30) extends from the base (21) without covering the sacrificial free end (26), or the plate (30) extends from the base (21) and beyond the free end (26) of the wall (29).

9. Fan (1) according to one of claims 1 to 8, wherein the base (21) comprises a first edge (24) and a second edge (24), said edges (24) extending on either side of the flanks (25), the first edge (24) and the second edge (24) being sacrificial.
